Europäisches Patentamt

**European Patent Office**

**Office européen des brevets**

(19)

(11) Veröffentlichungsnummer: **0 441 175 A2**

# EUROPÄISCHE PATENTANMELDUNG

(12)

(21) Anmeldenummer: **91100809.2**

(22) Anmeldetag: **23.01.91**

(51) Int. Cl.5: **C23G 1/36**, B01D 61/14, C02F 1/44

(30) Priorität: **23.01.90 DE 4001851**

(43) Veröffentlichungstag der Anmeldung:
**14.08.91 Patentblatt 91/33**

(84) Benannte Vertragsstaaten:
**AT BE CH DE DK ES FR GB GR IT LI LU NL SE**

(71) Anmelder: **BERGHOF ELEKTRONIK PRODUKTIONS- UND VERTRIEBSGES. m b.H.**
**Wiesing 323**
**A-6200 Jenbach(AT)**

(72) Erfinder: **Schüssler, Roland**

**Ranzenäckerstrasse 2/2**
**W-7311 Schlierbach(DE)**
Erfinder: **Pichler, Peter**

**A-6280 Gerlosberg 20 B(AT)**
Erfinder: **Lenz, Margit**

**A-6262 Schlitters 169(AT)**

(74) Vertreter: **Boeters, Hans Dietrich, Dr. et al**
**Boeters & Bauer Bereiteranger 15**
**W-8000 München 90(DE)**

(54) **Verfahren und Vorrichtung zur Reinigung, Rückgewinnung und Wiederverwendung heisser, wässriger Entfettungsbäder und Spritzreiniger.**

(57) Die Erfindung betrifft ein Verfahren zur Reinigung, Rückgewinnung und Wiederverwendung heißer, wäßriger Entfettungsbäder und Spritzreiniger durch Ultrafiltration, wobei die Filtration bei Temperaturen unterhalb des Trübungspunktes des Prozeßmediums erfolgen soll, und eine Vorrichtung dafür.

Fig. 1a

EP 0 441 175 A2

Verdräng - Takt

Taktdauer ≈ 1 min
Bedienung 1 min

4

Compound - Takt

Taktdauer 1 → 3 h
Bedienung 10 min

5

Produktion | Vorbehandlungen   Ultrafiltrationsanlage | Arbeitstakte

| UF-Arbeitstakte :   Recycling | Fig. 1b

# VERFAHREN UND VORRICHTUNG ZUR REINIGUNG, RÜCKGEWINNUNG UND WIEDERVERWENDUNG HEISSER, WÄSSRIGER ENTFETTUNGSBÄDER UND SPRITZREINIGER

In der metallver- und -bearbeitenden Industrie wird die Ultrafiltration traditionell für die Emulsionstrennung eingesetzt.

In erweitertem Sinn: Fast überall dort, wo (metallische) Werkstücke und Oberflächen durch "nasse", emulsionsartige Abwässer erzeugende chemisch-mechanische Produktionsverfahren ver-/bearbeitet, behandelt, gereinigt, geprüft, verändert, veredelt und/oder beschichtet werden, läßt sich die Ultrafiltration erfolgreich einsetzen für Aufgaben der (Industrieabwasser-)Reinigung, Entsorgung und des Recyclings.

Der Vorzug der Ultrafiltration gegenüber konkurrierenden Verfahren liegt in der - im wesentlichen hilfschemikalienfreien - rein mechanischen Filtration im (sub)-molekularen Bereich.

Klassische "Emulsionen" in diesem Sinne sind Kühlschmierstoffe (Bohrwässer) aus der spanabhebenden Bearbeitung, sowie eine Großzahl von Waschwässern und wäßriger alkalischer Entfettungsbäder.

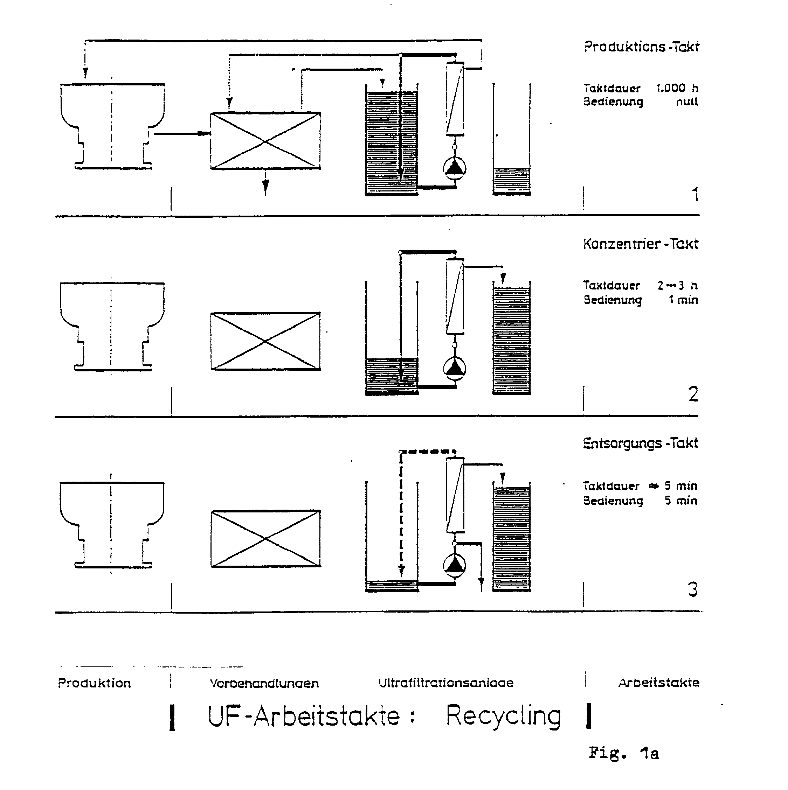

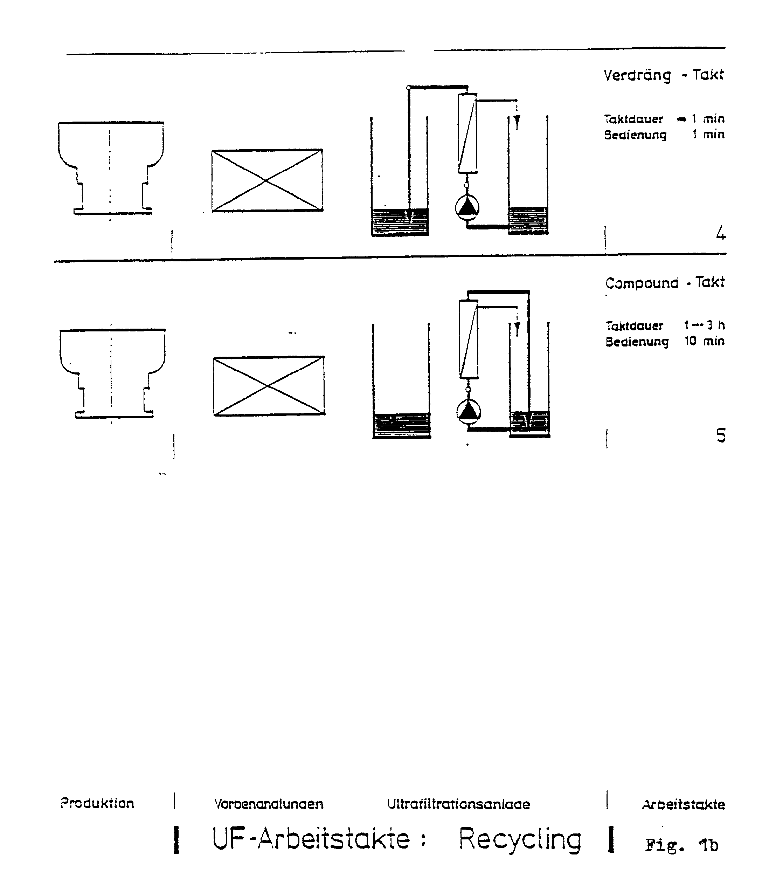

Während Kühlschmiermittel nach zeit- und anwendungsbedingter Einbüßung ihrer technologisch relevanten Eigenschaften lediglich zur Entsorgung durch Ultrafiltration anstehen, können Waschwässer und Entfettungsbäder - geeignete Arbeitsbedingungen vorausgesetzt - im Recyclingbetrieb über längere Zeit gepflegt, rückgewonnen und gereinigt dem Produktionsprozeß wieder zugeführt werden (vgl. Abb. 1).

Nach technischer Durchführung der Entfettung wird u.a. unterschieden zwischen Tauch- und Spritzenfettung:

Wasch- und Entfettungsbedarf an Werkstücken aller Art besteht in der gesamten Metall-, Kfz-, und verwandten Industrie:

- Fahrzeugwäsche in Garagen- und Verkehrsbetrieben
- Teilewäsche für stark beschmutzte / befettete Teile in mechanischen Werkstätten
- Entfettung von Werkstücken aller Art vor nachfolgenden Veredelungsprozessen wie Galvanisierung, Lackierung, Beschichtung...

In der Regel stellen die Waschmedien 1- bis 5- (u.U. auch höher-)prozentige wäßrige Lösungen spezieller - auf die jeweilige Aufgabenstellung abgestimmter - Industriereiniger-Konzentrate dar.

Die Rahmenrezepturen dieser Industriereiniger sind sorgfältig abgestimmte flüssige oder pulverförmige Kompositionen und enthalten üblicherweise u.a.:

- im Schaum-, Netz und Emulgierverhalten ausgewogene Formulierungen waschaktiver Substanzen (WAS) vorwiegend nichtionischen (ethoxylierte Derivate von Fettakkoholen etc.), aber auch anionischen Charakters (z.B. Alkansulfonate),
- Lösungsvermittler (Alkohole und spezielle Hydrotrope),
- anorganische Gerüststoffe (Builder) wie Carbonat, Borat, Polyphosphat, mit synergistischer ( = reinigungs- verstärkender) Wirkung.

Bei der industriellen Reinigung werden überwiegend nichtionogene Tenside wie Alkanol-, Alkylamin- und Alkylphenolpolyglykolether, Fettsäurepolyglykolester und Fettsäurealkanolamide oder deren Kombinationen eingesetzt. Vielfach verwendete Beispiele für diese Tensidtypen sind gesättigte und ungesättigte $C_{12}$-$C_{18}$ Fettalkohole + 5-20 EO wie Kokoslorol ($C_{12}$-$C_{16}$) + 10 EO und Oleylalkohol + 10 EO, Talgamin + 10 EO, Nonylphenol + 6-20 EO, Ölsäure + 3 EO, Kokosfettsäure- und Ölsäureethanolamide. Die nichtionogenen Tenside sind aufgrund der großen Variablilität von Grundkörper und Ethoxylierungs- bzw. Propoxylierungsgrad speziellen Praxisbedingungen sehr gut anzupassen.

Die nichtionogenen Tenside übertreffen im allgemeinen die anionaktiven in der Reinigungs- bzw. Entfettungswirkung und emulgieren - bei entsprechender Auswahl - die abgelösten Öle und Fette nur geringfügig. Hierbei wird deutlich, daß Reinigungswirkung und Emulgiervermögen unterschiedliche, nicht korrelative Eigenschaften sind. Eine Emulgierung von Ölen und Fetten beeinflußt die Standzeit der Bäder negativ, da die Fette in der Tensidmizelle eingebaut zu Rückbefettungen und zu einer starken Abnahme der Entfettungswirkung führen können. Um längere Standzeiten zu erreichen und die Abwasseraufbereitung zu vereinfachen, werden deshalb eine möglichst geringe Emulgierung und weitgehende Abtrennung der eingeschleppten Öle und Fette angestrebt.

Nichtionische Tenside, die in Wasser eine klare Lösung bilden, zeigen im Gegensatz zu anderen Tensiden ein besonderes Verhalten. Bei Temperaturerhöhung wird die Lösung beim Überschreiten einer bestimmten, relativ scharf definierten Temperatur, die für das jeweilige Tensid charakteristisch ist, trüb, und es erfolgt Auftrennung der Lösung in zwei flüssige Phasen. Diese Temperatur wird Trübungspunkt, englisch "cloud point" genannt. Der Trübungspunkt kann durch Additive beeinflußt werden; das kann dadurch geschehen, daß die Additive in die Mizellen eingelagert werden und deren Eigenschaften verändern oder indem die Eigenschaften des Wassers, also der Umgebung der Mizellen, verändert wird. Dieser letztere Mechanismus trifft besonders auf den Zusatz von Elektrolyten zu, die generell den Trübungspunkt mit steigender Konzentration zu tieferen Temperaturen verschieben.

Beim Erhitzen wäßriger Lösungen von Niotensiden auf Basis von Alkylenoxiden wie. z.B. Nonylphenolpolyglykolether (NPO) und Fettalkoholpolyglykolether (FA) tritt meist bei einer relativ exakten Temperatur die Trübung ein. Es kommt zur Trennung in eine wasserarme und eine wasserreiche Phase. Mit steigender Zahl der EO-Gruppen wird der Trübungspunkt zu höheren Temperaturen hin verschoben. Bei nicht zu starker Überschreitung des Trübungspunktes wird die wasserarme/tensidreiche Phase in der wasserreichen/tensidarmen Phase emulgiert. Bei Niotensiden, deren Trübungspunkt etwas unterhalb der Anwendungstemperatur liegt, wird häufig ein günstigeres Waschvermögen beobachtet als bei Verbindungen mit Trübungspunkten oberhalb der Anwendungstemperatur. Für die Einstellung eines optimalen EO-Grades ist daher die Anwendungstemperatur von großer Bedeutung und vice versa (siehe auch: Stache - Tensidtaschenbuch)

Reinigerformulierungen sind dann von besonderem Interesse, wenn sie die folgenden Bedingungen erfüllen:

- Rückgewinn- und insbesondere Ultrafiltrierbarkeit
- einfache, möglichst chemiefreie Abwasserbehandlung
- vernünftige Preisgestaltung.

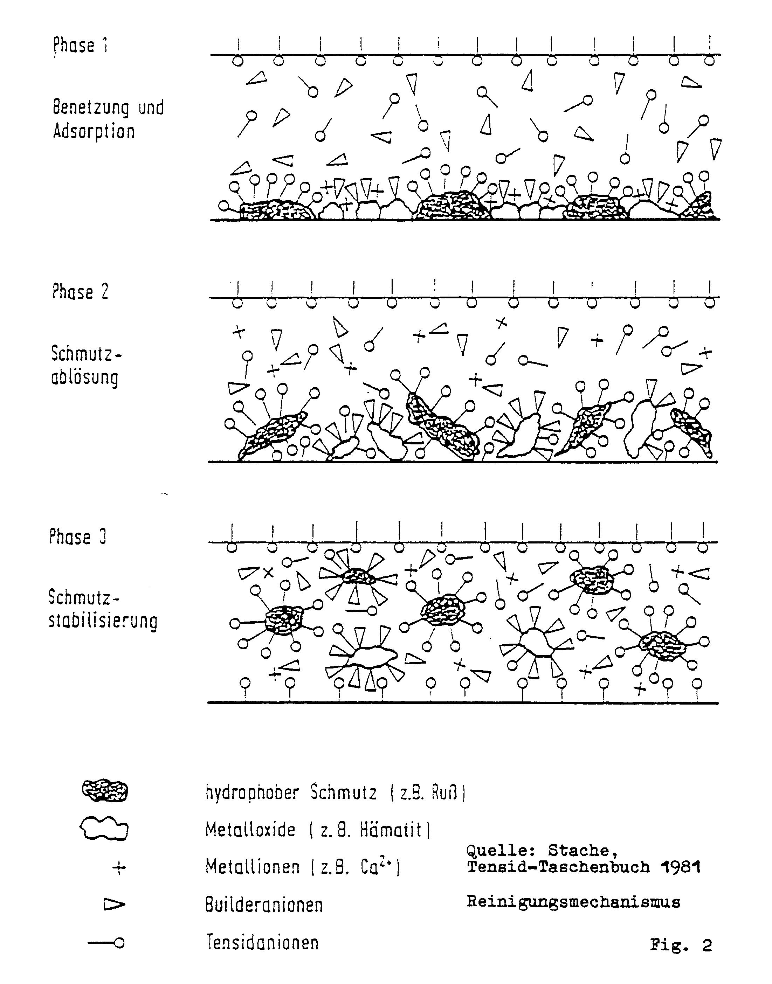

Die Wirkmechanismen der Reiniger-Komponenten beim Reinigungs-/ Entfettungsvorgang sind schematisch dargestellt in Abb. 2.

Die Entfettung kann je nach Werkstücken oder Art der Entfettungsanlagen kalt, heiß, im Tauch- oder Spritzverfahren erfolgen.

Die heiße Spritzentfettung hat den Vorteil, daß die Schmutz- und Fettablösung sehr rasch erfolgt. Bedingung ist, daß der Reiniger bei der Anwendung nicht schäumt. Sie eignet sich besonders für die Reinigung von Gestellware, Blechen und Profilen. Die Teilereinigung erfolgt z.B. in Schäferkästen und Dampfstrahlgeräten. Allerdings waren die hohen Kosten durch Wärmeverluste beim Einsatz dieses Verfahrens bisher ein großer Nachteil.

Für ein erfolgreiches Entfettungsbad-Recycling durch Ultrafiltration (UF) auf der Hand liegt die Forderung nach möglichst quantitativer Membran-Passage aller Reiniger-Bestandteile oder doch zumindest eine möglichst geringe Verzerrung der Reiniger-Rezeptur beim Durchtritt durch die Membran.

Angesichts der Tatsache, daß UF-Filtrate (Permeat) wasserklar sind, können trübe Reiniger-Ansätze einem solchen Recycling nicht zugeführt werden. Die Reinigerformulierungen müssen also vor der Filtration bei Temperaturen unterhalb ihres Trübungspunktes vorliegen.

Die Erfinder haben es sich zur Aufgabe gemacht, ein Verfahren zur Reinigung, Rückgewinnung und Wiederverwendung heißer, wäßriger Entfettungsbäder und Spritzreiniger zur Verfügung zu stellen, bei dem das der Ultrafiltration zuzuführende Prozeßmedium klar ist.

Zur Lösung dieser Aufgabe haben sie ein Verfahren bereitgestellt, das die Erkenntnisse über die komplexen Zusammenhänge zwischen Reinigerformulierung für das Entfettungsbad, Temperatur des Entfettungsbades, Temperatur bei der Reinigung des Prozeßmediums sowie Trübungspunkt der Reinigerformulierung berücksichtigt.

Das erfindungsgemäße Verfahren ist dadurch gekennzeichnet, daß

- die Temperatur des Prozeßmediums vor der Ultrafiltration abgesenkt wird und/oder
- der Trübungspunkt des Prozeßmediums mit Hilfe chemischer Zusätze angehoben wird und/oder
- die zur Entfettung einzusetzende Reinigerformulierung eine derartige Zusammensetzung besitzt, daß der Trübungspunkt des Prozeßmediums oberhalb der Temperatur liegt, bei der die Ultrafiltration erfolgt.

Eine besonders bevorzugte Ausgestaltung des Verfahrens sieht vor, daß das Prozeßmedium in der Ultrafiltrationsanlage mittels einer Wärmepumpe auf eine Temperatur unterhalb des Trübungspunktes abgekühlt wird. Die dabei gewonnene Wärme wird dann in vorteilhafter Weise dem Entfettungsbad zur Aufrechterhaltung von dessen Wärmebilanz wieder zugeführt. Alternativ kann der Wärmeabfluß auch mit Hilfe eines Gegenstromkühlers erfolgen.

Der Trübungspunkt des Prozeßmediums kann mit Hilfe von anionischen Tensiden und/oder (in der Regel anionischen) organischen Lösungsvermittlern - sogenannten Hydrotropen - wie Cumolsulfat, Toluolsulfonat, Butylmonoglykolsulfat, Glykolen, Alkoholen etc. angehoben werden.

Eine andere oder zusätzliche Möglichkeit zur Beeinflussung des Trübungspunktes ist die Auswahl der entsprechenden Reinigerformulierung. Wie weiter oben bereits detaillierter dargelegt, steigt der Trübungspunkt von nichtionischen Tensiden mit der Zahl der Ethylenoxidgruppen.

Dem Fachmann ist es nun an die Hand gegeben, die Bedingungen für die Entfettung optimal zu gestalten und gleichzeitig mit Hilfe der Erfindung durch chemische Zusätze zur Reinigerformulierung und/oder deren Variation und/oder durch Einstellung der geeigneten Temperatur des zu reinigenden Prozeßmediums zu sichern, daß dieses nicht in trüber Form vorliegt. Seine Auswahl der Reinigerformulierung wird sich auch an folgendem orientieren:

Die Entfettungswirkung von nichtionogenen Tensiden bzw. Tensidkombinationen wird durch ihren Trübungspunkt in der Reinigerlösung beeinflußt. Die nichtionogenen Tenside auf der Basis von Polyethylen- und Polypropylenglykolen besitzen eine größere Löslichkeit bei niedrigeren Temperaturen als bei höheren. Bei Temperaturerhöhung scheidet sich aus einer klaren Tensidlösung beim Trübungspunkt eine zweite, netzmittelreichere Phase ab. Hierbei kann die Ausscheidung der netzmittelreichen Phase in einer sehr engen Temperatur von nur wenigen Grad Celsius erfolgen, sich aber auch über einen großen Temperaturbereich erstrecken. Eine Formulierung mit scharfem Trübungspunkt besitzt eine intensive Antischaumwirkung bei der Arbeitstemperatur, aber gute Abspülbarkeit bei geringfügig niedrigeren Temperaturen, bei der Formulierung mit langsamer Ausscheidung dagegen wird eine unerwünschte grob disperse Abscheidung der Netzmittelphase auch bei längerer Standzeit von Reinigungsbädern verhindert. Das Maximum der Entfettungswirkung liegt bei nichtionogenen Tensidkombinationen in der Nähe des Trübungspunktes. Klar ersichtlich ist der Zusammmenhang zwischen Trübungspunkt des Tensids und maximale Wirksamkeit bei der entsprechenden Arbeitstemperatur. Aufgrund der ausgewählten verschiedenartigen Tensidtypen und der unterschiedlichen Trübungsgruppen sind die Unterschiede in der Wirksamkeit auch bei gleichem Trübungspunkt zu erklären.

Ein Beispiel für die Wahl geeigneter Temperaturparameter sie hier angeführt:

```
Entfettungsbadtemperatur   80 °C
Trübungspunkt              75 °C
UF-Arbeitstemperatur       65 °C
```

Hierbei ist die Leistung der UF-Anlage noch sehr hoch (wenig Module bei 65 °C), und gleichzeitig ergibt die geringe Temperaturdifferenz von 15 °C kleine Wärmepumpen-Einheiten.

Die vorliegende Erfindung gibt dem Anwender auch eine Vorrichtung zur Durchführung des genannten Verfahrens an die Hand. Diese ist dadurch gekennzeichnet, daß sie eine bekannte Ultrafiltrationsvorrichtung mit zusätzlich einer Wärmepumpe oder einer Gegenstromkühlung umfaßt.

Im folgenden wird die Vorrichtung anhand von Zeichnungen beispielhaft erläutert.

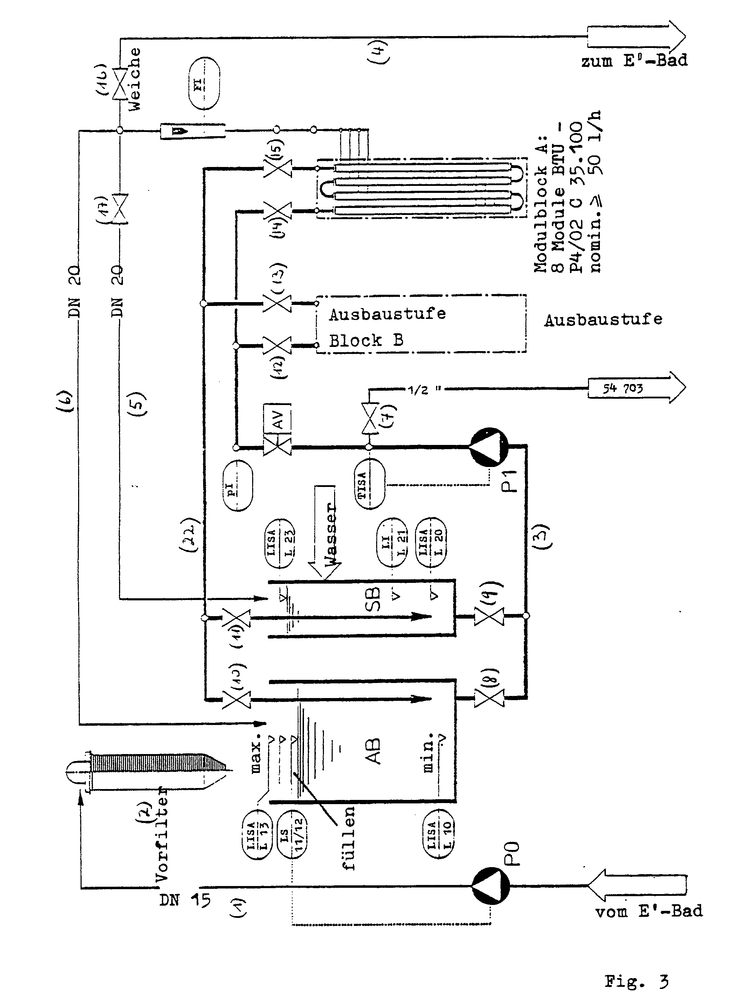

Die Figur 3 zeigt das Schema einer herkömmlichen Ultrafiltrationsanlage. Hierbei wird vom Entfettungsbad über die Pumpe PO durch die Leitung (1) und über den Vorfilter (2) Prozeßmedium in den Arbeitsbehälter (AB) geführt. Über die Leitung (3) wird das Medium mit Hilfe der Pumpe (P1) und über das Anfahrventil (AV) durch einen oder mehrere die Membran enthaltende Modulblöcke geleitet. In diesen Modulblöcken ist die Membran parallel zur Flußrichtung angeordnet. Durch die Membran hindurchgetretenes Permeat wird dann über die Leitung (4) zurück zum Entfettungsbad geleitet oder - beim Spülvorgang - über die Leitung (5) in den Spülbehälter (SB) geführt. Die Leitung (6) fungiert als Entlastungsleitung zur Vermeidung von Überdrücken. Das Retentat wird über die Leitung (22) im Kreislauf zurück in den Arbeitsbehälter (AB) bzw. den Spülbehälter (SB) zurückgeführt, wobei es sich immer weiter aufkonzentriert. Vor dem Spülbetrieb wird das anfallende ölhaltige Konzentrat aus dem Arbeitsbehälter (AB) mit der Pumpe (P1) über die Leitung (3) und das Ventil (7) abgeleitet/entsorgt. Die Ventile 12 - 15 sind Absperrarmaturen, mit denen die Modulblöcke zu- oder weggeschaltet werden. Die Ventile 8-11 dienen der Vorwahl. Arbeitsstellung: 8 und 9 offen, Spülbetrieb: 9 und 11 offen. Die Ventile 16 und 17 stellen Weichen dar, mit denen das Filtrat zur Entfettungsanlage oder alternativ zum Spülbehälter (SB) geführt wird. Mit Hilfe der Niveausteuerungen LISA L 10, 13, 20 und 23 und der Niveauschalter LS 11/12 und LI L 21 werden die Füllhöhen im Arbeitsbehälter (AB) und im Spülbehälter (SB) kontrolliert.

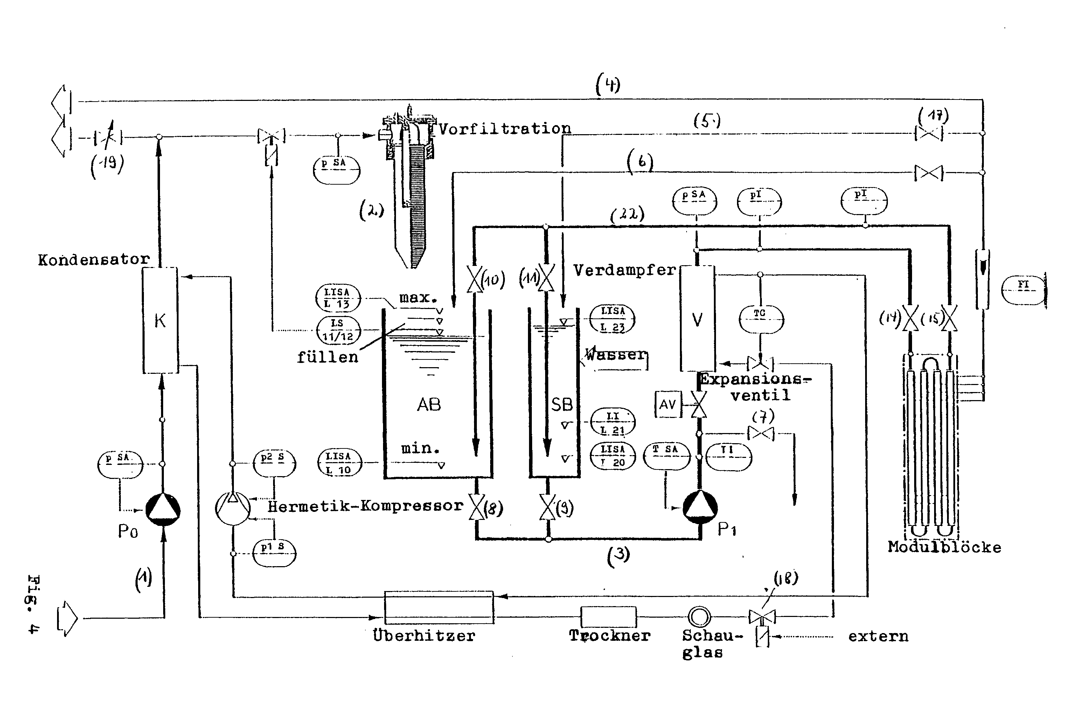

Die Figur 4 zeigt, ebenfalls schematisch, eine erfindungsgemäße Vorrichtung mit einer Wärmepumpe. Hierbei ist der Verdampfer (V) der Wärmepumpe in den Retentat-Kreislauf: Arbeitsbehälter bzw. Spülbehälter <-> Ultrafiltrations-Module eingebaut. Er kann z.B. von aus dem Arbeitsbehälter oder dem Spülbehälter durch die Leitung (3) und das Anfahrventil strömendem Prozeßmedium durchflossen werden, bevor dieses die Ultrafiltrations-Module erreicht. Der Verdampfer (V) kann durch ein Temperaturkontrollsystem (TC) und ein thermostatisiertes Expansionsventil gesteuert/beaufschlagt werden. Der Wärmepumpenbetrieb kann durch externes Ansteuern des Ventils (18) freigegeben werden (d.h. Medium kann jetzt strömen und der Hermetikkompressor springt über die Druckschalter p 15 und p 25 an). Nach Durchlaufen des Verdampfers (V) strömt es z.B. durch den Überhitzer und gelangt in den Kondensator (K), wo es die über den Verdampfer (V) aufgenommene Wärme an das Prozeßmedium abgibt, das z.B. durch die Zuführung (1) und die Pumpe (PO) strömt. Der größte Teil des Prozeßmediums kann darauf über ein Ventil (19) zurück in das Entfettungsbad geleitet werden. Im Verhältnis zum durch den Kondensator (K) gepumpten Anteil an Prozßmedium ist der Teil, der der Reinigung durch Ultrafiltration zugeführt wird, vorzugsweise gering.

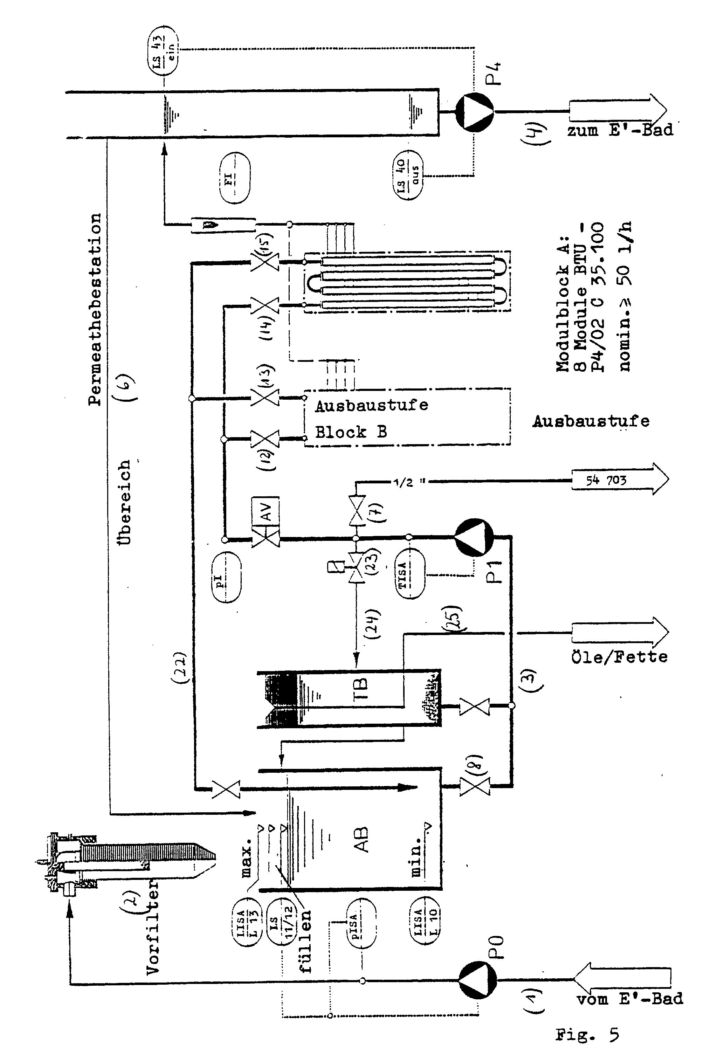

Figur 5 zeigt schematisch eine andere Variante einer gängigen Ultrafiltrationsanlage. Hier ist der Spülbehälter durch einen Phasentrennbehälter (TB) ersetzt.

Reinigungswirkung und Emulgiervermögen sind unterschiedliche, nicht korrelative Eigenschaften. Da eine Emulgierung von Ölen und Fetten die Standzeit der Bäder negativ beeinflußt (Einbau in die Tensidmizelle, Rückbefettung) werden möglichst geringe Emulgierung und weitgehende Abtrennung der eingeschleppten Öle und Fette angestrebt. Durch geeignete Rezepturen (z.B. NPO in Gegenwart von Phosphat-Buildern) ist es möglich, Industriereiniger mit sehr guter Reinigungs- aber geringer Emulgierwirkung einzustellen. Ein im Ruhezustand befindliches Entfettungsbad wird sich daher überschüssigen Fettes und Öles bis zu einem gewissen Grade selbsttätig durch Aufrahmen entledigen. Gleichzeitig bleibt hierbei die für das Emulgieren der Fette notwendigen - und damit verlorene - Tensidmenge auf ein Minimum beschränkt. Angewendet auf die Ultrafiltrations-Technologie bedeutet dies, daß aus dem Retentat-Kreislauf der Ultrafiltration kontinuierlich oder im Taktbetrieb über ein Ventil (23) und eine Leitung (24) ständig eine kleine Menge Emulsion/Retentat auf einen Behälter "abgeblutet" wird, dessen Geometrie und Verweilzeitbemessung eine schwerkraftbetriebene Phasentrennung der Retentatmischung gestattet. Während frei aufrahmendes Öl im freien Überlauf über die Leitung (25) abgezogen wird, gelangt die wäßrige Unterfraktion aufgrund geeigneter hydrostatischer/geodätischer Verhältnisse zum Arbeitsbehälter und damit in den Retentatkreislauf zurück.

Dadurch wird das Retentat im Arbeitsbehälter ständig abgereichert und gepflegt.

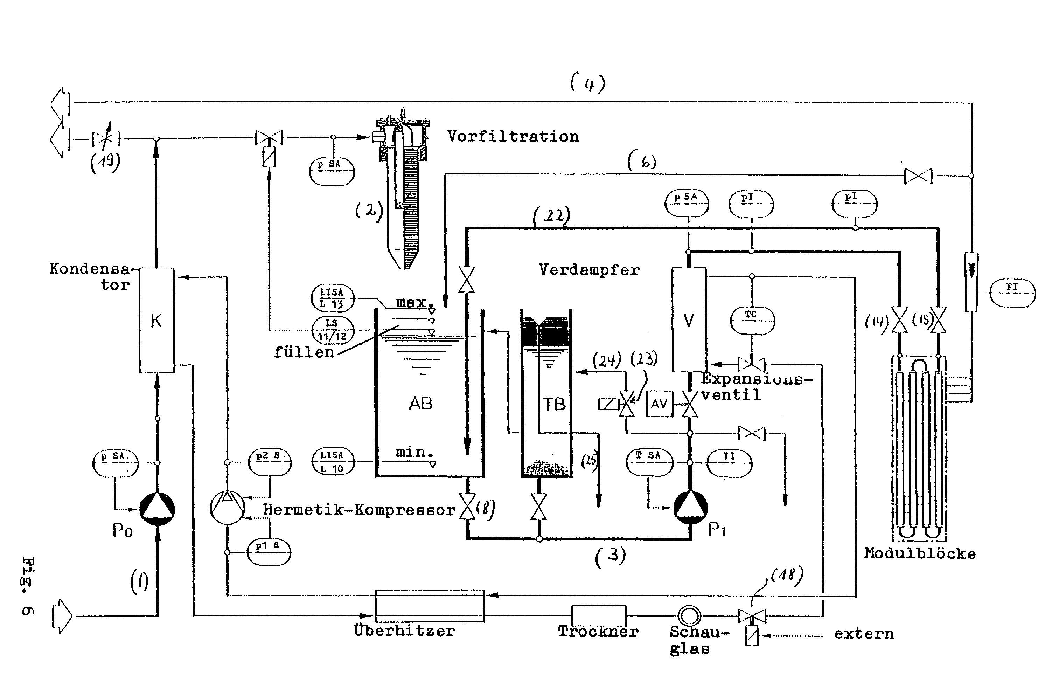

Figur 6 zeigt schematisch ebenfalls eine derartige Vorrichtung mit Phasentrennbehälter, die aber nun mit der erfindungsgemäßen Wärmepumpe versehen ist. Auch hier ist der Verdampfer (V) so angeordnet, daß er von dem aus dem Arbeitsbehälter z.B. durch die Leitung (3) strömenden Prozeßmedium durchlaufen wird, bevor dieses die Ultrafiltrations-Modulblöcke erreicht. Die Anordnung des Kondensators (K) in dem Entfettungsbad-Kreislauf über ein Ventil (19) ist ebenfalls analog.

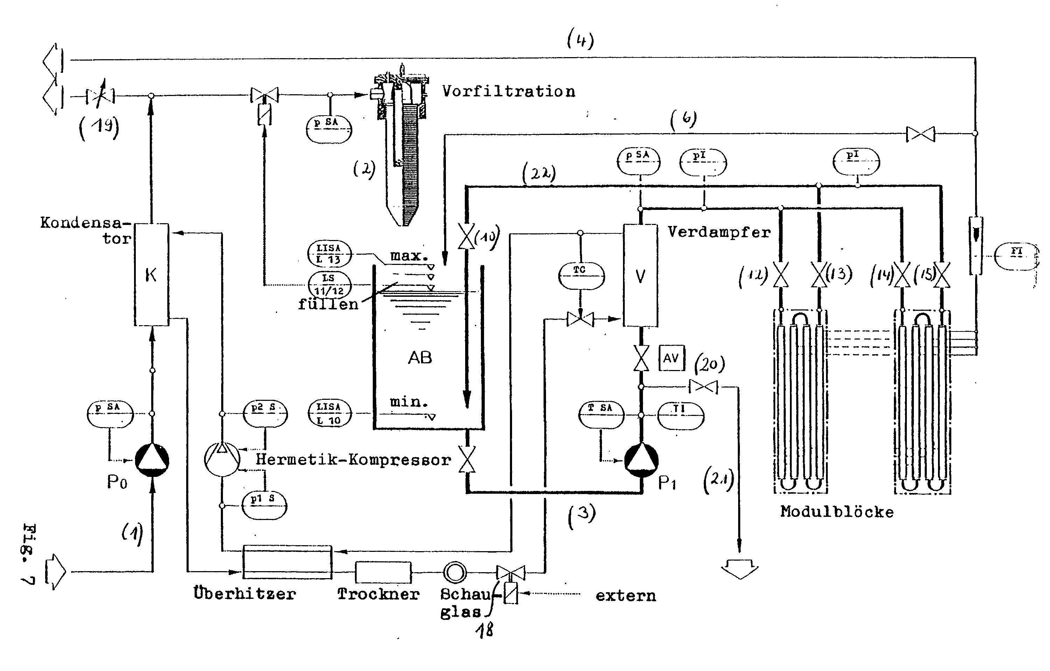

Figur 7 zeigt - wiederum schematisch - eine weitere Variante der erfindungsgemäßen Vorrichtung. Hier kann aus dem Retentat-Kreislauf z.B. über die Leitung (3), das Ventil (20) und die Leitung (21) Retentat aus dem Arbeitsbehälter entnommen und einer externen Phasentrennung zugeführt werden. Diese Lösung ist dann zu bevorzugen, wenn die Ultrafiltrationsvorrichtung auf sehr engem Raum untergebracht werden soll. Die erfindungsgemäße Wärmepumpe ist in gleicher Weise angeordnet wie bei den anderen beiden dargestellten Ausführungsformen der Erfindung (Fig. 4 und 6).

Der Verzicht auf einen Spülbehälter in den beiden zuletzt genannten Ausführungsformen (mit Phasentrennbehälter bzw. mit externer Phasentrennung) ist deshalb möglich, weil Entfettungsbäder ja selbst Reinigerformulierungen darstellen. Deshalb werden die Ultrafiltrations-Membranen (insbesondere bei Bad-Neuansatz) permanent abgereinigt und Fremdchemikalien häufig verzichtbar. Eine Ultrafiltrationsanlage ganz ohne Spüleinrichtung kann gewissermaßen als eine Art "Dosierstation" betrachtet werden, welche ständig neue/gereinigte Waschlauge zur Verfügung stellt.

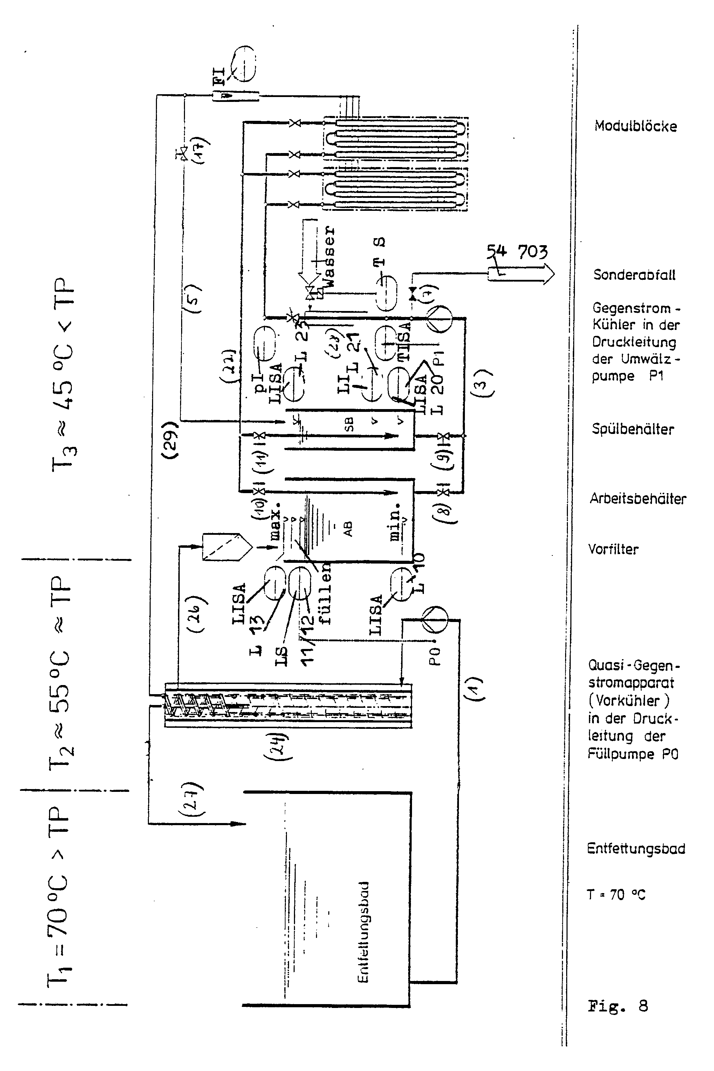

In Figur 8 ist schematisch eine andere Ausführungsform der erfindungsgemäßen Vorrichtung dargestellt. Ausgehend von der in Fig. 3 gezeigten Vorrichtung ist hier zum einen eine Gegenstrom-Vorkühlung (24) eingefügt, in der das über Leitungen (29) und (27) zur Entfettungsanlage zurückgeführte gereinigte Prozeßmedium als Kühlmittel für dasjenige Prozeßmedium dient, das über die Leitungen (25) und (26) zum Arbeitsbehälter geführt wird. An die Stelle des Verdampfers der mit einer Wärmepumpe versehenen Ausführungsformen tritt ein Gegenstromkühler (28), der z.B. mit Wasser als Kühlmittel betrieben wird. In der Abbildung sind Temperaturen genannt, die ein Beispiel für die Durchführung des Verfahrens in dieser Vorrichtungs-Modifikation darstellen.

Im folgenden wird die bisher bekannte Ultrafiltration von Prozeßmedien aus Entfettungsbädern beispielhaft genauer erläutert sowie die Beeinflussung der Trübungspunkte durch verschiedene Hydrotrope anhand von Beispielen gezeigt.

Ultrafiltration - Überblick über Anwendung und gängigen Aufbau

Die Ultrafiltration ist ein druck-getriebener Membranprozeß. Der Filtrations- oder Trennvorgang vollzieht sich an sogenannten (UF-) Membranen, die treibende Kraft ist die an der Membran anliegende Druckdifferenz - der transmembrane Druck.

Der UF-Prozeß ist eine industriell seit nahezu zwei Jahrzehnten bewährte allgemein anerkannte Regel der Technik (a.a.R.d.T.) zur Trennung höhermolekularer Komponenten überwiegend flüssiger Medien in vielen Bereichen der allgemeinen chemischen Verfahrenstechnik, Pharmazie, Lebensmittelchemie und metallverarbeitenden Industrie als Separier-, Entsorgungs- oder Recyclinginstrument.

Die anlagentechnischen Hauptgruppen der Ultrafiltration sind im wesentlichen

- Membranmodule als eigentlicher Kernbestandteil; sie stellen die Filterfläche zur Verfügung, einem Wärmetauscher ähnlich
- Systempumpen für Beschickung, Umwälzung und Erzeugen der erforderlichen Strömungs- und Druckpotentiale
- Arbeitsbehälter zur Aufnahme des zu filtrierenden Mediums
- Spülbehälter zur Aufnahme der für die routinemäßige Spülung erforderlichen Reinigungslösungen

Je nach der Aufgabenstellung und Einbindung in den jeweiligen Produktionsvorgang wird eine mehr oder weniger umfangreiche Peripherie erforderlich - beispielsweise bestehend aus

- Vorbehandlungen, Vor- und Grobreinigungen, Dekantierapparaten
- Stapelbehältern und Puffern für Rohmedien und Filtrat
- (chemische) Nachbehandlungsstufen für Filtrat und Konzentrat

Membranen und Module

Die Kernstücke von UF-Anlagen sind die in konstrukt. Einheiten, den Modulen, zusammengefaßte Membranen. Unter dem Begriff Membran versteht man in diesem Zusammenhang hauchdünne, mikroporöse und damit halbdurchlässige (semipermeable) Folien vorzugsweise aus einem Polymer (Kunststoff) und je nach Typ während d. Fertigungsverfahrens auf eine stabile Stützschicht aufkaschiert (Tubularmembranen) oder unmittelbar zusammen mit einer solchen "ausgesponnen" (Kapillarmembranen).

Die Membran besitzt eine unsymmetrische = anisotrope Struktur mit sich in Filtratrichtung deutlich erweiternden Poren, um Verstopfungserscheinungen entgegenzuwirken.

Die Porengröße von UF-Membranen liegt im Bereich einiger zig Ångström (10.000.000 Å = 1 mm), die Durchlässigkeit (Permeabilität) wird aber üblicherweise durch die molekulare Trenn- oder Ausschlußgrenze (Molecular-Weight-Cut-Off) ausgedrückt. Sie besagt, ab welchem Molekulargewicht (Maßeinheit Dalton = kg/kMol) Moleküle oder Molekülkonglomerate und Partikel zuverlässig zurückgehalten werden, oder anders ausgedrückt:

Sehr kleine Moleküle wie Wasser, gelöste Salze, polare Organika und spezielle Tenside passieren (permeieren) die Membran ungehindert, dagegen werden Öle, Emulsionen sowie "sperrige" Moleküle und Partikel zuverlässig von der Membran zurückgehalten.

Arbeitsweise der Ultrafiltration

Das zu filtrierende Medium wird im Gegensatz zur herkömmlichen Schicht- oder Kuchenfiltration nicht senkrecht, sondern mit hoher Geschwindigkeit parallel zur Membran geführt, um durch große Turbulenz (große Reynoldszahl) wie in der Rührzelle leistungsmindernde Ablagerungen (fouling) zu verhindern. Während ein Anteil von ca. 1 % der Flüssigkeit unter dem Einfluß d. anstehenden transmembranen Drucks von einigen bar die Membran als das (meist wäßrige Permeat=) Filtrat durchdringt, wird der verbliebende Rest (Retentat) zurück in den sogenannten Arbeitsbehälter und von dort wieder und wieder an der Membran vorbeizirkuliert, um sich dabei mehr und mehr aufzukonzentrieren.

Das sich durch die Filtratabfuhr einstellende Volumendefizit im Arbeitsbehälter wird in der Regel durch Zufuhr von Prozeßmedium mittels einer Füllpumpe ausgeglichen, so daß die Vorlagemenge konstant und deren Konzentration möglichst lange - z.B. während eines 100-stündigen Wochenarbeitstaktes - auf niedrigem Niveau gehalten wird.

Mit fortschreitender Aufkonzentrierung sinkt die Filterleistung (Flux) - anfänglich rascher, dann allmählich - ab, um gegen Ende des Betriebszyklus einem wirtschaftlich unbefriedigenden Minimalwert zuzustreben.

Zu diesem Zeitpunkt wird - manuell oder bei vollautomatischen Anlagen per Programm - der Eindickungs- oder Konzentrierungsvorgang eingeleitet: Bei abgeschalteter Füllpumpe wird das Retentatvolumen weitestgehend eingeengt = eingedickt = entwässert.

Der Trennvorgang wird unterbrochen und verbliebenes Konzentrat zur Weiterbehandlung bzw. Entsorgung abgepumpt, wenn

- die Filtratleistung vollends zum Erliegen gekommen ist,
- die Temperatur unter dem Einfluß der Umwälzenergie einem zulässigen Maximalwert überschreitet,
- das Minimalniveau im Arbeitsbehälter erreicht wird und die Pumpe Luft zu ziehen droht, oder
- zu jedem beliebigen durch den Betreiber bestimmbaren Moment.

Der sich hieran anschließende Spülprozeß beginnt mit dem sogenannten **Verdrängen**: In Modulen, Rohrleitungen u. Pumpe verbliebenes Konzentrat wird durch einen Teil der zur Verfügung stehenden Spüllösung in den Arbeitsbehälter gedrückt = verdrängt, um die Spüllösung nicht unnötig mit Konzentrat zu belasten.

Mit dem verbleibenden Rest der Spüllösung werden nach dem Nachschärfen mit Reinigerkonzentrat Anlage und Module gespült. Dabei werden die Module grundsätzlich in derselben Weise wie bei dem vorausgehenden Trennprozeß durchströmt, allerdings durch Zirkulation über den Spülbehälter und so lange, bis sich die Anlage über das

- Ende einer vorgegebenen Spülzeit oder das
- Erreichen der maximal zulässigen Temperatur ausschaltet.

Danach kann der nächste Betriebszyklus über den während der Spülung wieder befüllten Arbeitsbehälter aufgenommen und die abgearbeitete Reinigungslösung durch Auffüllen des Spülbehälters, z.B. mit Netzwasser für den nächsten Verdrängvorgang, ergänzt werden.

Sonderspülungen

Da das Spülwasser infolge des jeder Spülung vorausgehenden Verdrängungsvorganges beim Fehlen besonderer Forderungen oder Maßnahmen Bestandteil des Arbeitsbehälterinhaltes wird, braucht es nicht gesondert aufgefangen, weiterbehandelt oder entsorgt zu werden, sondern kann zusammen mit letzterem aufgearbeitet werden.

Gleichwohl verbietet sich diese auf die reine Entsorgungs- oder oder Abwasserproblematik beschränkte Vorgehensweise bei der Mehrheit der UF-Applikationsfälle - vornehmlich in der Pharmazie, der Lebensmitteltechnologie und der Reinstwasserbereitung - aufgrund der mangelnden Prozeßverträglichkeit der Spülchemikalien.

Je nach Maßgabe des jeweiligen Produktionsvorganges muß...

- die Spülung bei Recyclingprozessen (Elektrotauchlack, Gleitschleifrecycling, Entfettungsbäderpflege etc.) mit Eigenpermeat durchgeführt werden, weil ein Einschleppen von Fremdchemikalien zu Störungen im Produktionsverfahren führen kann
- die konsequente Entleerung, Reinigung, Nachspülung sowie die separate Stapelung und Weiterbehandlung aller Prozeß-, Spül- und Verdrangungsvolumina in der pharmazeutischen und Lebensmittelchemie die Vermischung der sehr teuren und extrem reinen Produkte mit Fremdchemikalien absolut unterbinden.
- die Reinigung zwingend in mehreren unterschiedlichen Schritten mit mindestens ebenso vielen Verdrängungs- und Klarspültakten vollzogen werden wie z.B. die Zerstörung von z.T. für die Anlagenreinigung unabdingbaren, aber absolut produktionsschädlichen Enzymen durch starke Laugen mit anschließend intensiver Nachspülung mit klarem/destilliertem Wasser ...

Schaltung und Anschluß der Module

Während Kapillarmodule (Kapillardurchmesser 0.5 - 2 mm) grundsätzlich parallel und ohne Rücklaufdrossel angeströmt werden, weil sich der anstehende Druck infolge der hohen Strömungswiderstände bereits entlang der relativ kurzen Modulbaulängen von 500 bis 1000 mm abbaut, erfordert die hydraulische Anpassung von Tubularmodulen (Membranrohrdurchmesser bis 1 ") die Reihenschaltung von üblicherweise 6 Stück der 2.5 m langen Module zu einem sogenannten Loop (Schleife) mit einer Rücklaufdrossel.

Desweiteren lassen sich mehrere parallel angeströmte Loops konstruktiv zusammenfassen zu einem Modulblock.

Von Einfachstausführungen abgesehen sind Module normalerweise mit zwei Permeatanschlüssen ausgestattet, von denen einer nur in Ausnahmesituationen wie z.B. zur Ableitung des Trüblaufs bei defekter Membran (Membranbruch) beansprucht wird.

Die ordentlichen Permeatanschlüsse aller Module in einem Block sind parallel auf eine Sammelleitung aufgelegt, in der sich nach Erfordernis auch die filtratseitigen Meßstrecken zur Qualitäts- und Prozeßüberwachung befinden wie Durchflußmesser mit Grenzwertschaltern, Trübungswächter, pH- bzw. Redox-Meßketten und Refraktometer ...

Hauptpumpen

Die Prozeßpumpen haben in der Ultrafiltrationstechnik zwei elementare Aufgaben zu erfüllen:
- die Erzeugung des mediumspezifischen, für optimalen Membrandurchgriff erforderlichen transmembranen Drucks - bei Tubularmodulen in der Regel 4 bis 6 bar - sowie

- die Aufrechterhaltung einer ausreichend turbulenten u. damit foulingverhindernden Querströmung über die Membran (≥ 4 m/s)

Bei kleineren Anlagen bis zu Leistungen von ca. 400 l/h werden beide Funktionen von einer einzigen Pumpe wahrgenommen - die Retentatumwälzug erfolgt zu 100 % über den Arbeitsbehälter.

Bei größeren Anlagenleistungen zwingen hoher Kraftbedarf u. die wachsenden Installationsdimensionen zum kostensparenderen Zwei-Pumpen-Prinzip (Feed-and Bleed), d.h. zur Aufteilung der beiden Aufgaben auf zwei Spezialisten: Aus der loop-internen Retentatumwälzung wird ein kleiner Anteil über die Rücklaufdrossel in den Arbeitsbehälter zurück abgeblutet (Bleed) und aus letzterem über Speisepumpe und Vorlaufarmatur wieder ersetzt (Feed):

- Die Umwälzpumpe übernimmt im wesentlichen die Umwälzarbeit und hat lediglich den Druck für die Überwindung der im Loop intern wirkenden Strömungsverluste aufzubringen,
- die Speisepumpe hebt das Gesamtdruckniveau auf den prozeßerforderlichen Wert an und beteiligt sich mit dem 10 ... 20 %-igen Feedstrom am Gesamtumwälzvolumen.

Die Energieeinsparung - bei einer Feed-Quote von 0.1 innerhin 45 % - erklärt sich daraus, daß nicht der gesamte Umwälzstrom zu 100 % nach jeder Zirkulation aus dem aufgebauten Druckniveau entlassen, sondern lediglich der bedeutend kleinere Bleed-Strom entspannt werden muß.

Beispiel 1

a) Trübungspunkte und ihre Beeinflussung durch verschiedene Hydrotrope - VRW 72 (Fa. Henkel)

|  | pH A.dest | pH Leitungsw. |
|---|---|---|
| 1% VRW 72 | 11.8 | 11.5 |
| 2% VRW 72 | 12.4 | 12.4 |
| 3%: | Pulver löste sich nicht in absehbarer Zeit | |

| 1%-iger Ansatz VRW72 | klar*) | trüb | Trpkt. |
|---|---|---|---|
| VRW + 1% Bglsulfat | | + | RT |
| + 2%  -"- | | + | RT |
| + 3%  -"- | + | | > 95°C |
| + 5%  -"- | + | | > 95°C |
| VRW + 1% Cumolsulf. | | + | RT |
| . | | | |
| . | | | |
| . | | | |
| 5% | | + | RT |

*) wird erst nach längerem Stehen (über Nacht) klar
Bglsulfat ... Butylmonoglykolsulfat     Hy ... Hydrotrop
Cumolsulf.... Cumolsulfonat             Trpkt..Trübungs-
RT ........... Raumtemperatur                      punkt

b) T 308 = VRW 308/1 (Fa. Henkel)

| | A.dest. | | Leitungsw. | |
|---|---|---|---|---|
| | 1% T 308 | 2% T 308 | 1% T 308 | 2% T 308 |
| ohne Zusätze | um 67°C | | | |
| + 1% Butylgl. | 68° | | | |
| + 2% -"- | 68° | | | |
| + 2% IPA | | | 70° | |
| + 2% Glykol | | | 67° | |
| + 1% Bglsulf. | 71 | | | 63°(?) |
| + 2% -"- | um 80° | | 80° | 70° |
| + 3% Bglsulf. | | | | 75° |
| + 1% Cum.sulf. | | | 78° | 70° |
| + 2% -"- | | | | 80° |
| + 3% -"- | | | | ca. 90° |
| + 1% RA 178 | 88° | 86° | 84° | 80° |
| + 2% RA 178 | | >95° | 80° | 92° |

Der Trpkt kann mit Hydrotropen sehr gut angehoben werden. Als wirklich erfolgreich erwiesen sich hauptsächlich Butylmonoglykolsulfat (Bglsulf), Cumolsulfonat (Cum.sulf; noch besser für T 308) und das REWO-Korrosionsschutzmittel Rowocor RA 178 (Fa. REWO), das ebenfalls gute Hydrotropeigenschaften aufweist. Butylglykol, Alkohol (IPA) und Glykol waren weniger wirksam bis unwirksam. 1-2%, maximal 3% Hydrotrop-Zusatz war in allen getesteten Fällen ausreichend. RA 178 wirkt ebenso gut wie Cumolsulfonat!

RA 178 ist vorzugsweise immer dann einzusetzen, wenn Eisenwerkstoffe behandelt werden (Korrosionsschutz!)

Auch dauertrübe Reiniger (Spritzreiniger) lassen sich mit Hilfe von Hydrotropen klären: z.B. VRW 72 (HENKEL) Besonderheit bei VRW 72: Mit Butylmonoglykosulfat läßt sich der Trpkt anheben, die klärende Wirkung des Hydrotrops auf die unrsprünglich trübe Reinigerlösung tritt aber mit zeitlicher Verzögerung ein: Erst nach einigen Stunden wird die Lösung wasserklar. Das bleibt sie dann allerdings bis über 90° C. Bei 2% Hydrotrop ist die Lösung bei Raumtemperatur noch opal, bei 3% dagegen völlig klar, der Trpkt verschiebt sich auf > 90° C. Die Trpkt-Erhöhung vollzieht sich hier offensichtlich nicht fließend, sondern ruckartig (2% Hy - noch fas keine Wirkung; 3% Hy - klar bis über 90° C.)

Beispiel 2

Einige Spritzreiniger der Fa. Henkel wurden auf UF-Tauglichkeit und Recyclingfähigkeit untersucht. Getestet wurden:
- die von Henkel empfohlenen Reiniger T 5175, Neutrapon 5088, T 5181, Almeco 36, P3-Upon, P3-Saxin, P3-Grato und Nabuclean STT 267 (flüss. SR von Corrotech, im Einsatz bei Battenfeld)
- die Hydrotrope Butylmonoglykolsulfat, Cumolsulfonat und Rewocor RA 178

Die Reiniger wurden in verschiedenen Konzentrationen angesetzt und pH, Leitfähigkeit, Trübungspunkte und deren Beeinflußbarkeit durch Hydrotrope (Butylglykolsulfat, Cumolsulfonat, RA 178) gemessen. Hinsichtlich des Trübungspunktes bestand aber kein Unterschied zwischen 1- und 2%-igen Reinigeransätzen.

T 5181 ist als einziges Produkt sowohl in Leitungswasser als auch in A. dest. opal bis trüb und läßt sich nur durch höhere Hydrotrop-Zusätze (5% RA 178) und nach längerem Stehen klären. Nabuclean STI 267 von Corrotech und P3-Grato sind in Leitungswasser opal (härte-empfindlich), aber in A. dest. klar löslich. Durch Überschreiten des Trpktes trüb gewordenes STI 267 wird erst nach längerer Zeit (über Nacht) wieder ganz klar.

Als einziges Produkt enthält P3-Grato auch anionische Tenside und hat keinen Trübungspunkt. Grato ist auch nicht als Spritzreiniger deklariert.

Alle Produkte außer Upon, Saxin und Grato sind (fast) neutral und builderarm/builderfrei. Alle Trübungspunkte liegen sehr niedrig (ca. ab 36 - max. 45°C) und zeigen kein schrfes Umschlagen, sondern haben einen breiteren Umschlagbereich von einigen Grad. 1-3%-ige Hydrotrop-Zusätze zeigen keine überragende Wirkung auf den Trübungspunkt. Höhere Hydrotrop-Konzentrationen verbieten sich wahrscheinlich aus Gründen des Schaumverhaltens. Relativ am besten wirken hier Butylglykolsulfat und RA 178.

Detaillierte Ausführung der Ergebnisse: siehe Tabellen I - III.

Tabelle I:      Ansätze in Leitungswasser

| | T 5175 | Neutrapon 5088 | T 5181 | Almeco 36 | Upon | Saxin | Grato | Nabuclean STI 267 |
|---|---|---|---|---|---|---|---|---|
| pH 1% pH 2% | 9.5 | 8.8 | 9.4 | 9.8 | 11.4 | 11.6 | 11.9 | 9.3 |
| Lf 1% Lf 2% | 2.300 | 470 | 1.800 | | | | | 967 |
| Trpkt | 36° | 40° | RT(opal) | 40° | 37° | 38° | RT(opal) | RT(opal) |
| Bgls. 1% 2% 3% | . . | | RT opal fast kl. | | | | RT opal opal | opal fast kl. fast kl. |
| Cumol 1% 2% 3% | | | RT opal opal | | | | RT opal opal | RT opal opal |
| RA178 1% 2% 3% 5% | | | fast kl. fast kl. | | | . | opal | opal fast kl. |

11

Tabelle II:   Ansätze in A. dest.:

| | T 5175 | Neutrapon 5088 | T 5181 | Almeco 36 | Upon | Saxin | Grato | Nabuclean STI 267 |
|---|---|---|---|---|---|---|---|---|
| pH 1% | 9.5 | 8.3 | 9.5 | 9.8 | 11.7 | 11.9 | 12.1 | |
| pH 2% | 9.8 | 8.7 | 9.5 | 9.9 | 11.3 | 12.1 | 12.1 | 9.3 |
| Lf 1% | 2.012 | 167 | 1.459 | 7.180 | 8.400 | 11.580 | 13.520 | 724 |
| Lf 2% | 3.300 | 313 | 2.770 | 12.600 | 14.200 | 22.600 | 24.300 | |
| Trpkt | 36° | 40 | RT f.kl. | 40° | 37° | 40° | >95° | 30-34° |
| Bgls.2% | 40-42 | 48-50 | 37-40 | 43-47 | 44-46 | 46-48 | - | 45-47 |
| 3% | 43-45 | 52-55 | 38-40 | 45-50 | 46-52 | 49-55 | - | 49-51 |
| 5% | 44-46 | 55-58 | 38-40 | 49-52 | 49-53 | 54-58 | - | 54-56 |
| Cumol1% | | | | | | | | |
| 2% | nicht | weiter | getastet | da | zu wenig | Erfolg | | |
| 3% | | | | | | | | |
| RA1781% | | | | | | | | |
| 2% | 40° | 50-54 | 34-40 | 54-56 | 43-45 | 53-55 | - | 40-45 |
| 3% | 45-49 | | | 57-61 | 46-49 | 48-50 | - | 40-45 |
| 5% | 50-52 | 57-60 | 37-42 | 56-64 | 49-55 | 53-56 | - | 40-45 |

Tabelle III:   Inhaltsstoffe:

| | T 5175 | Neutrapon 5088 | T 5181 | Almeco 36 | Upon | Saxin | Grato | Nabuclean STI 267 |
|---|---|---|---|---|---|---|---|---|
| Alkali | | | | | | | x | |
| Phosphat | x | | | x | x | x | x | |
| Silicat | | | | | | x | x | |
| Carbonat | | | | x | | x | x | |
| Borat | | | | x | | | | |
| AT | | | | | | | x | |
| NT | x | x | x | x | x | x | x | |
| Korr.inh | x | x | x | | | | | |

## Patentansprüche

1.  Verfahren zur Reinigung, Rückgewinnung und Wiederverwendung heißer, wässriger Entfettungsbäder und Spritzreiniger durch Ultrafiltration, wobei die Filtration bei Temperaturen unterhalb des Trübungspunktes des Prozeßmediums erfolgen soll, dadurch *gekennzeichnet*, daß
- die Temperatur des Prozeßmediums vor der Ultrafiltration abgesenkt wird und
- gegebenenfalls der Trübungspunkt des Prozeßmedium mit Hilfe chemischer Zusätze angehoben wird und/oder
- gegebenenfalls die zur Entfettung einzusetzende Reinigerformulierung mit einer derartigen Zusammensetzung ausgewählt ist, daß der Trübungspunkt des Prozeßmediums oberhalb der Temperatur liegt, bei der die Ultrafiltration erfolgt.

2. Verfahren nach Anspruch 1, dadurch *gekennzeichnet*, daß das Prozeßmedium in der Ultrafiltrationsanlage mittels einer Wärmepumpe auf eine Temperatur unterhalb des Trübungspunktes abgekühlt und die gewonnene Wärme dem Entfettungsbad zur Aufrechterhaltung von dessen Wärmebilanz wieder zugeführt wird.

3. Verfahren nach Anspruch 1, dadurch *gekennzeichnet*, daß die Temperatur des Prozeßmediums mit Hilfe einer Gegenstromkühlung abgesenkt wird.

4. Verfahren nach einem der Ansprüche 1 bis 3, dadurch *gekennzeichnet,* daß die chemischen Zusätze zur Anhebung des Trübungspunktes Hydrotrope und/oder anionische Tenside sind.

5. Vorrichtung zur Reinigung, Rückgewinnung und Wiederverwendung heißer, wässriger Entfettungsbäder und Spritzreiniger durch Ultrafiltration, dadurch *gekennzeichnet*, daß sie eine Wärmepumpe umfaßt.

6. Vorrichtung zur Reinigung, Rückgewinnung und Wiederverwendung heißer, wässriger Entfettungsbäder und Spritzreiniger durch Ultrafiltration dadurch *gekennzeichnet*, daß sie eine Gegenstromkühlung für das Prozeßmedium umfaßt.

7. Vorrichtung nach Anspruch 5 oder 6, dadurch *gekennzeichnet,* daß sie mit einer Spüleinrichtung versehen ist.

8. Vorrichtung nach Anspruch 5 oder 6, dadurch *gekennzeichnet*, daß sie mit einem Trennbehälter versehen ist.

9. Vorrichtung nach Anspruch 5 oder 6, dadurch *gekennzeichnet*, daß sie Zu- und Ableitungen zu einer externen Phasentrennvorrichtung besitzt.

Produktions-Takt

Taktdauer 1.000 h
Bedienung null

**1**

Konzentrier-Takt

Taktdauer 2 — 3 h
Bedienung 1 min

**2**

Entsorgungs-Takt

Taktdauer ≈ 5 min
Bedienung 5 min

**3**

Produktion     Vorbehandlungen     Ultrafiltrationsanlage     Arbeitstakte

UF-Arbeitstakte : Recycling

Fig. 1a

Verdräng - Takt

Taktdauer ≈ 1 min
Bedienung 1 min

4

Compound - Takt

Taktdauer 1 — 3 h
Bedienung 10 min

5

Produktion | Vorbenandlungen Ultrafiltrationsanlage | Arbeitstakte

| UF-Arbeitstakte : Recycling | Fig. 1b

Phase 1

Benetzung und
Adsorption

Phase 2

Schmutzablösung

Phase 3

Schmutzstabilisierung

hydrophober Schmutz (z.B. Ruß)

Metalloxide (z.B. Hämatit)

Metallionen (z.B. Ca²⁺)

Builderanionen

Tensidanionen

Quelle: Stache,
Tensid-Taschenbuch 1981

Reinigungsmechanismus

Fig. 2

Fig. 3

Fig. 4

Fig. 5

Modulblock A:
8 Module BTU -
P4/02 C 35.100
nomin. ≥ 50 l/h

Ausbaustufe

Permeatbestation

Übereich

Vorfilter

Ausbaustufe
Block B

Öle/Fette

zum E'-Bad

vom E'-Bad

54 703

1/2 "

füllen

max.

min.

AB

TB

AV

pI

TISA

FI

pISA

LISA L 13

LS 11/12

LISA L 10

LS 43 ein

LS 40 aus

P0   P1   P4

Fig. 6

Fig. 7

$T_1 = 70\,°C > TP$

$T_2 \approx 55\,°C \approx TP$

$T_3 \approx 45\,°C < TP$

FI

(17)

(5)

(29)

(22)

Wasser

T S

54 703

pI LISA

LI L — L 25

L 21 (23)

TISA

LISA L 20 P1

(3)

SB

(10) (14)

(9) (8)

max.

AB

min.

LISA L 13

LS 11/12 füllen

(26)

LISA L 10

P0

(24)

(27)

(1)

Entfettungsbad

Modulblöcke

Sonderabfall

Gegenstrom-
Kühler in der
Druckleitung
der Umwälzpumpe P1

Spülbehälter

Arbeitsbehälter

Vorfilter

Quasi-Gegenstromapparat
(Vorkühler)
in der Druckleitung der
Füllpumpe P0

Entfettungsbad

T = 70 °C

Fig. 8